# EUROPÄISCHE PATENTSCHRIFT

(11) **EP 1 574 456 B1**
(45) Veröffentlichungstag und Bekanntmachung des Hinweises auf die Patenterteilung: **24.05.2006**
(21) Anmeldenummer: 05003599.7
(22) Anmeldetag: 18.02.2005
(51) Int. Cl.: B65G 15/02

(54) **Gurtbandförderer mit separaten Klemmschuhen für Führungselemente**
Belt conveyor having separate clips for clamping guide members
Convoyeur à courroie avec des agrafes séparées pour le serrage des éléments de guidage

(30) Priorität: 11.03.2004 DE 102004012344
(43) Veröffentlichungstag der Anmeldung: 14.09.2005
(73) Patentinhaber: Interroll (Schweiz) AG, 6592 S. Antonino (CH)
(72) Erfinder: Axmann, Norbert, 74889 Sinsheim (DE)
(74) Vertreter: Geitz Truckenmüller Lucht

(56) Entgegenhaltungen:
- DE-A1- 3 826 953
- FR-A- 2 560 168

## Beschreibung

Die Erfindung betrifft einen Gurtbandförderer, insbesondere einen Kurvengurtförderer mit einem über Umlenkrollen geführten endlosen Fördergurt, an dem ein über dessen Gurtebene vorstehendes Führungselement befestigt ist, das vor seiner Befestigung an dem Fördergurt separat handhabbar ist und das beim Umlaufen des Fördergurtes mit diesem mitläuft und an dessen sich in Förderrichtung des Fördergurtes erstreckenden Führungsflächen beim Umlaufen des Fördergurtes zur Gurtebene geneigte Laufflächen von drehbaren Führungsrollen abrollen, so dass quer zur Förderrichtung des Fördergurtes auftretende Querkräfte kompensierbar sind bzw. werden.

Aus der DE 42 13 035 A1 ist ein Kurvengurtförderer bekannt geworden, dessen umlaufender endloser Fördergurt mit einem längs seiner Außenkante verlaufenden, endlosen und untrennbar mit diesem verbundenen sowie mit diesem umlaufenden Randwulst versehen ist. An dessen zum Zentrum der Kurve hinweisenden Flanke sind mehrere Führungsrollen elastisch angedrückt, um die infolge des Kurvenlaufes auftretenden Längs- und Querkräfte auch bei einer stark verzogenen Kurve und bei beträchtlichen Niveauunterschieden zwischen den endseitigen Umlenkrollen verschleißarm zu kompensieren.

Aus der DE 38 26 953 A1 ist ein ähnlicher Kurvengurtförderer mit einem über kegelförmige Tragrollen umgelenkten Förderband bekannt geworden, das an seinem Außenrand eine endlose, mitlaufende wulstförmige Randleiste aufweist. Die Randleiste ist wiederum zwischen geneigte Laufflächen aufweisenden Führungsrollen geführt, um die beim Betrieb auftretenden Zentripedalkräfte zu kompensieren.

Ein ähnlicher Gurtbandförderer ist aus der DE 198 54 327 A1 bekannt geworden. Dort ist ein Zahnriemenbauteil eines mit dem Fördergurt mitlaufenden Zahnriemens zur Kraftübertragung der Antriebskräfte von einem Zahnkranz auf den Fördergurt vorgesehen, der mit dem Fördergurt durch Aufschweißen, Aufvulkanisieren oder Aufkleben verbunden ist. Der Zahnriemenbauteil weist an seinen radial nach innen weisenden Enden jeweils eine über die gesamte Länge des Fördergurtes durchgehende Führungsleiste auf, die einstückig mit dem Zahnriemen verbunden ist. An deren Wulst greifen wiederum geneigte Laufflächen von Führungsrollen an, um die bei Gurtkurven zu deren Innenradius gerichteten Kräfte auffangen zu können und um auf diese Weise eine sichere Führung des Führungsgurtes zu erreichen.

Eine Weiterentwicklung des vorstehend beschriebenen Gurtbandförderers ist in der DE 199 53 691 A1 offenbart, die eine Gurtspannvorrichtung betrifft. Dort sind an der Unterseite des Fördergurtes ein mit diesem umlaufender, endloser Zahnriemen und an der Oberseite des Fördergurtes ein gegenüberliegendes, endloses Profil befestigt. Das Profil weist eine vom Randbereich des Fördergurtes weg weisende Erhöhung auf, die wiederum zur Anlage von Führungsrollen dient. Zur Lagesicherung des Fördergurtes beim Gurtanlauf unter Belastung und um ein Außereingriffgeraten der Zähne vom Zahnrad der Antriebsrolle und der Zähne des Zahnriemens zu vermeiden, sind zusätzlich mehrere Kugellager vorgesehen, welche das Profil an der Oberseite des Fördergurtes kontaktieren.

Ein anderes System eines Kurvengurtförderers ist aus der DE 198 05 204 A1 bekannt geworden. Dort ist auf der Innenseite eines umlaufenden Fördergurtes ein radial außenseitig durchgehender, endloser Haltestreifen befestigt. An dem Haltestreifen sind um senkrecht zur Fördergurtebene angeordnete Drehachsen drehbare Gleithülsen befestigt, die in Führungsnuten von Führungsschienen formschlüssig geführt sind.

Alle vorgenannten Gurtbandförderer haben den Nachteil, dass die Lebensdauer der Führungsleisten sehr gering ist. Bei hohen Geschwindigkeiten versagen derartige, aus dem Stande der Technik bekannte Führungsleisten bereits nach relativ kurzer Einsatzdauer. Im Falle von verschleißbedingten Beschädigungen oder eines kompletten Versagens der Führungsleisten, muss der gesamte Fördergurt ausgetauscht werden. Dies ist aufwendig und teuer.

Andere Ausgestaltungen betreffen Kurvenbandförderer, bei denen an dem Gurt mitlaufende Führungsrollen befestigt sind, die an ortsfesten Führungen geführt sind. Ein derartiger Kurvenbandförderer ist aus der EP 0 880 462 B1 bekannt geworden. An dessen endlosem Förderband sind zu dessen Führung und Kompensation der zum Kurveninneren gerichteten Radialkräfte mehrere mitlaufende Rollen vorgesehen, deren Drehachsen über durch Öffnungen in dem Förderband ragende Befestigungsmittel an dem Förderband befestigt sind. Beim Umlaufen des Förderbandes laufen die Laufflächen der mitlaufenden Rollen entweder nur an vertikalen oder an vertikalen und an horizontalen stationären Führungsflächen eines Tragrahmens entlang.

Ähnliche Kurvenbandförderer sind aus der US 5,332,082 und aus der NL-A-8702617 bekannt geworden.

Bei all diesen Kurvenbandförderern kann es jedoch zu einer permanenten Überbeanspruchung im Bereich der Rollenbefestigung am Gurt kommen, in Verbindung mit der Gefahr eines Verkantens und/oder Aufreißens in diesem Bereich, so dass auch diese Gurtbandförderer keine Langlebigkeit garantieren können. Die Langlebigkeit des Gurtes jedoch, insbesondere bei Gurtkurven, ist besonders wichtig, weil der Gurt in der Regel das teuerste Element ist und demgemäß das Ersatzteil entsprechend viel kostet. Weiterhin nachteilig bei diesen Kurvenbandförderern ist eine hohe Geräuschentwicklung, insbesondere bei hohen Umlaufgeschwindigkeiten.

Es ist deshalb eine Aufgabe der Erfindung, einen Gurtbandförderer zur Verfügung zu stellen, mit dem selbst bei hohen Umlaufgeschwindigkeiten des Fördergurtes ein über lange Zeit störungsfreier Betrieb bei einer geringen Geräuschentwicklung möglich ist und bei dem vorteilhafte Möglichkeiten für eine kostengünstige Reparatur, insbesondere von mit dem Fördergurt umlaufenden Führungselementen bestehen.

Diese Aufgabe wird erfindungsgemäß durch die Merkmale des Anspruches 1, insbesondere dadurch gelöst, dass in Förderrichtung entlang dem Fördergurt eine Vielzahl von separaten Klemmvorrichtungen, vorzugsweise Klemmschuhen befestigt sind, die jeweils ein an dem Fördergurt befestigtes Befestigungsprofil und ein mit diesem verbundenes federelastisches Klemmelement aufweisen, mittels dessen eine das Führungselement ausbildende, sich in Förderrichtung im Wesentlichen unterbrechungsfrei über die gesamte Länge des Fördergurtes erstreckende, vorzugsweise endlose, elastisch-flexible Führungsleiste relativ zu dem Befestigungsprofil festgeklemmt ist.

Dadurch werden besonders vorteilhafte Möglichkeiten für eine einfache und kostengünstige Montage und eine leichte Austauschbarkeit in Verbindung mit einer kostengünstigen Reparatur, insbesondere der Führungsleiste geschaffen, mit der selbst bei hohen Umlaufgeschwindigkeiten eine nur geringe Geräuschentwicklung auftritt, und wobei in Verbindung mit der Verwendung der erfindungsgemäßen Klemmvorrichtungen ein über lange Zeit störungsfreier Betrieb erreichbar ist.

Vorteilhafte Ausgestaltungen der Erfindung ergeben sich aus den abhängigen Ansprüchen sowie dem nachfolgenden Beschreibungsteil, in dem mehrere Ausführungsbeispiele der Erfindung anhand der Figuren beschrieben sind.

Es zeigen:
- Fig. 1: einen erfindungsgemäßen Gurtbandförderer, der als Kurvengurtförderer gestaltet ist, in einer Draufsicht von oben;
- Fig. 2: ein alternatives Ausführungsbeispiel eines erfindungsgemäßen Gurtbandförderers, der als gerader Gurtförderer gestaltet ist, in einem senkrecht zur Gurtebene und senkrecht zur Förderrichtung verlaufenden Querschnitt;
- Fig. 3: in einem Querschnitt senkrecht zur Förderrichtung einen vergrößerten Ausschnitt eines Gurtbandförderers im Bereich eines Seitenrandes eines Fördergurtes, mit einem auf der von einer Laufrolle abgewandten Außenseite des Fördergurtes an diesem befestigten Klemmschuh in einer ersten Ausführungsvariante;
- Fig. 4: in einem Querschnitt senkrecht zur Förderrichtung einen vergrößerten Ausschnitt im Bereich eines Seitenrandes eines Fördergurtes, mit einem auf der von einer Laufrolle abgewandten Außenseite des Fördergurtes an diesem mittels Nieten befestigten Klemmschuh in einer zweiten Ausführungsvariante;
- Fig. 5: in einer Ansicht gemäß Figur 4 einen bevorzugte Befestigungsvariante für einen Klemmschuh, unter Verwendung eines als Zahn gestalteten Befestigungskörpers, der mit Antriebszähnen eines Fördergurtantriebes in Eingriff bringbar ist, um einen formschlüssigen Antrieb des Fördergurtes zu bewirken;
- Fig. 6: einen Teil-Längs-Querschnitt in Förderrichtung im Bereich einer mit Antriebszähnen versehenen Umlenkrolle;
- Fig. 7: in einem Querschnitt senkrecht zur Förderrichtung einen vergrößerten Ausschnitt im Bereich eines Seitenrandes eines Fördergurtes, mit einem auf der von einer Laufrolle abgewandten Außenseite des Fördergurtes an diesem befestigten Klemmschuh in einer weiteren Ausführungsvariante;
- Fig. 8: in einem Querschnitt senkrecht zur Förderrichtung einen vergrößerten Ausschnitt im Bereich eines Seitenrandes eines Fördergurtes, mit einem auf der von einer Laufrolle abgewandten Außenseite des Fördergurtes an diesem befestigten Klemmschuh in einer weiteren Ausführungsvariante;
- Fig. 9: in einem vergrößerten Querschnitt senkrecht zur Förderrichtung einen an einem Fördergurt befestigten Klemmschuh gemäß der in Figur 3 gezeigten Ausführungsvariante;
- Fig. 10: in einem vergrößerten Querschnitt senkrecht zur Förderrichtung einen an einem Fördergurt befestigten Klemmschuh gemäß der in Figur 7 gezeigten Ausführungsvariante;
- Fig. 11: in einem vergrößerten Querschnitt senkrecht zur Förderrichtung einen an einem Fördergurt befestigten Klemmschuh gemäß der in Figur 8 gezeigten Ausführungsvariante;
- Fig. 12: in einem vergrößerten Querschnitt senkrecht zur Förderrichtung den Klemmschuh gemäß Figur 11 zur beispielhaften Verdeutlichung einer zusätzlich möglichen formschlüssigen Verankerung einer Führungsleiste an einem Fördergurt, hier mithilfe eines Niet;
- Fig. 13: eine vergrößerte Draufsicht eines Klemmschuhs in einer Ausführungsvariante gemäß den Figuren 4, 5 und 7;
- Fig. 14: eine Längs-Seitenansicht des Klemmschuhs gemäß Figur 13;
- Fig. 15: eine vergrößerte Draufsicht eines Klemmschuhs in einer Ausführungsvariante gemäß Figur 8;
- Fig. 16: eine Längs-Seitenansicht des Klemmschuhs gemäß Figur 15;
- Fig. 17: eine vergrößerte Draufsicht eines Klemmschuhs in einer weiteren Ausführungsvariante;
- Fig. 18: eine Quer-Seitenansicht des Klemmschuhs gemäß Figur 17;
- Fig. 19: eine Längs-Seitenansicht des Klemmschuhs gemäß Figur 17;
- Fig. 20: eine vergrößerte Draufsicht eines Klemmschuhs in einer weiteren Ausführungsvariante;
- Fig. 21: eine Quer-Seitenansicht des Klemmschuhs gemäß Figur 20;
- Fig. 22: eine Längs-Seitenansicht des Klemmschuhs gemäß Figur 20.

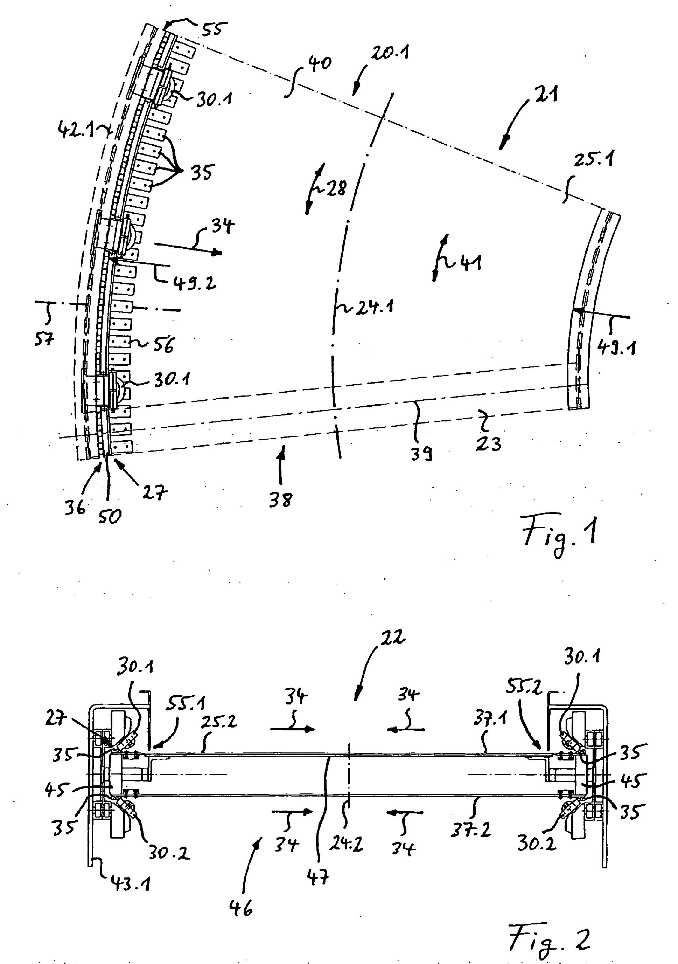

In Figur 1 ist ein als Kurvengurtförderer 21 gestalteter Gurtbandförderer 20.1 veranschaulicht. Dieser weist eine sich über einen Kreisringsektor 40 erstreckende Förderstrecke 44 einer Gurtkurve 38 auf, die von einem geschlossenen, endlosen, bandförmigen Fördergurt 25.1 gebildet wird. Dieser kann über jeweils an beiden Enden des Kreisringsektors 40 angeordneten Umlenkrollen 23 sowie über in gleichmäßigen Winkelabständen zwischen diesen angeordneten Laufrollen geführt sein, die in der Figur 1 nicht gezeigt sind. Die Achsen der Laufrollen schneiden sich im Zentrum des Kreisringsektors 40 in einem Mittelpunkt.

Bei den Laufrollen kann es sich um vom Innenradius 49.1 der Gurtkurve 38 zum Außenradius 49.2 der Gurtkurve 38 konisch ansteigende Rollen oder um zylindrische Rollen handeln. Die Umlenkrollen 23 und/oder die Laufrollen können aus jeweils aus an Seitenwangen 42.1, 42.2 des Kurvengurtförderers 21 gelagerten Rollen axial benachbarten und unabhängig voneinander, vorzugsweise frei drehbar gelagerten Rollenabschnitten gebildet sein.

In Figur 2 ist ein Querschnitt eines als gerader Gurtförderer 22 gestalteten Gurtbandförderers 20.2 veranschaulicht. Dieser umfasst ebenfalls einen geschlossenen, endlosen, bandförmigen Fördergurt 25.2. Der Fördergurt 25.2 ist ebenfalls über jeweils an beiden Enden angeordneten Umlenkrollen sowie über beabstandet zwischen diesen angeordneten Laufrollen 45 geführt, wobei die Umlenkrollen in Figur 2 nicht gezeigt sind. Bei den Laufrollen 45 kann es sich um zylindrische oder vorzugsweise ballige Rollen handeln. Die Umlenkrollen und die Laufrollen 45 sind an Seitenwangen 43.1, 43.2 gelagert und um parallel zur Gurtebene 26.1, 26.2 ausgebildete Rollenachsen drehbar.

Sowohl bei dem Kurvengurtförderer 21 gemäß Figur 1 als auch bei dem geraden Gurtförderer 22 gemäß Figur 2 können zwischen der oberen Trummlage 37.1 und der unteren Trummlage 37.2 sowie zwischen den Umlenkrollen 23 oder zwischen den Umlenkrollen 23 und den Laufrollen 45, parallel zur unteren Gurtebene 26.2 Tragbleche 47 angeordnet sein, die bei starker Belastung ein Durchhängen der oberen Trummlage 37.1 verhindern.

Es versteht sich, dass die Erfindung außer bei Gurtkurven 38 und Gurtgeraden 46 auch bei unterschiedliche Höhen überbrückenden Gurt-S-Konstruktionen vorteilhaft realisiert sein kann.

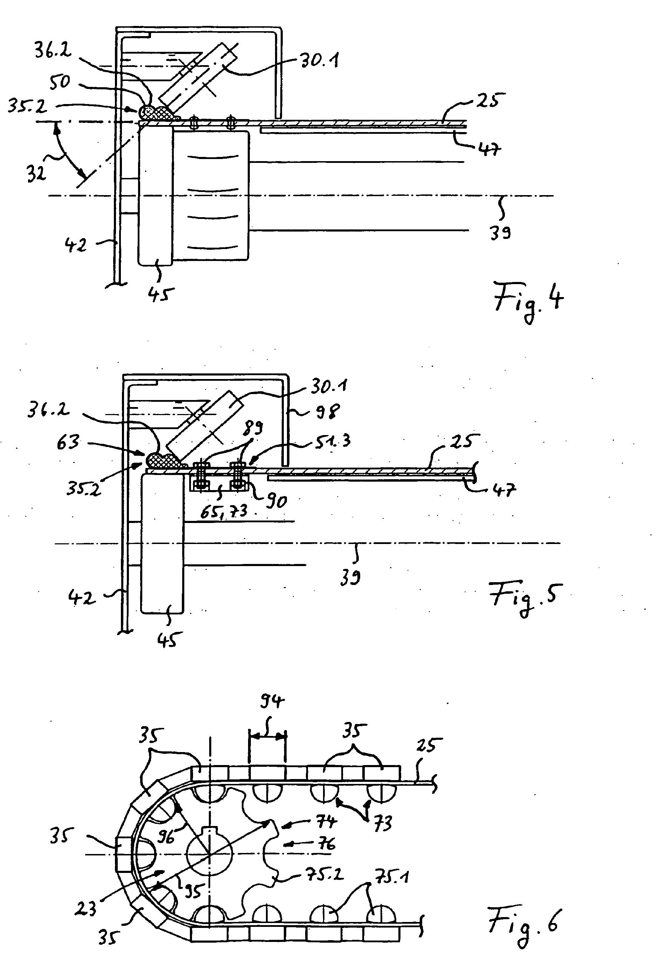

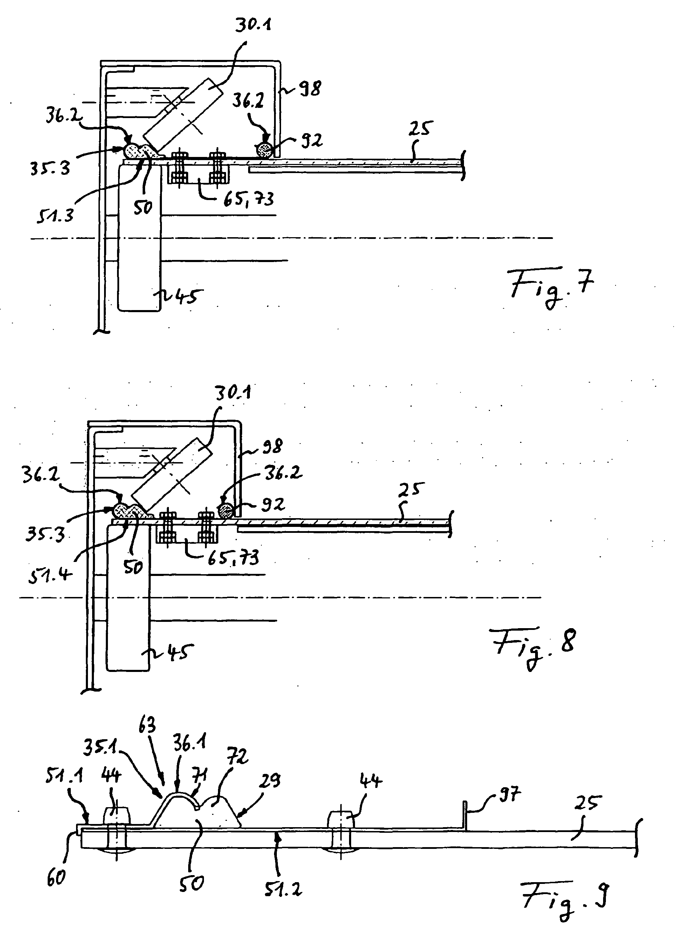

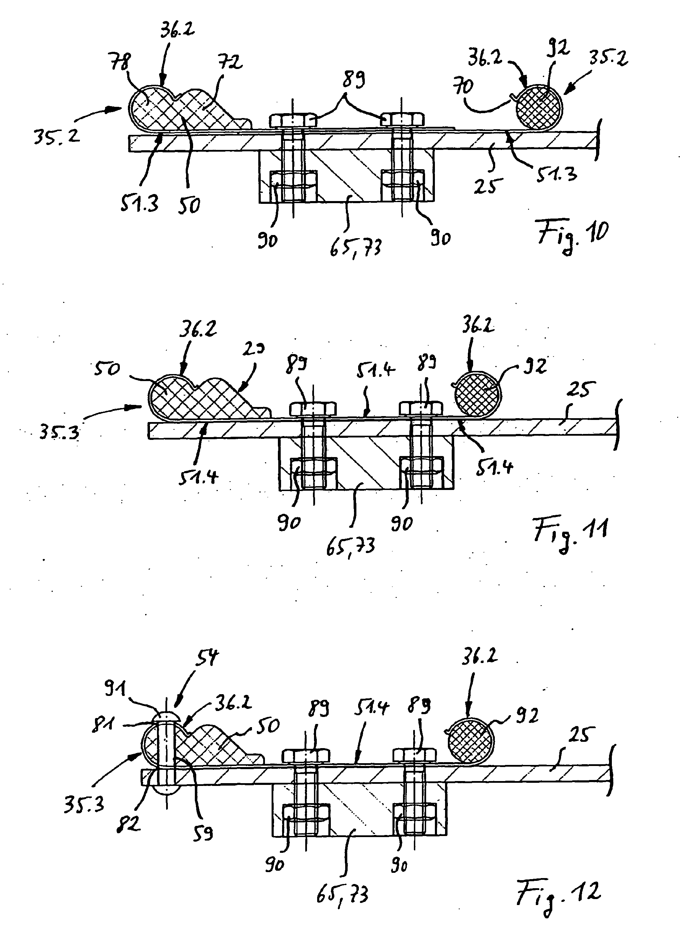

Der Antrieb der Fördergurte 25.1, 25.2, die nachfolgend der Einfachheit halber mit dem Bezugszeichen 25 bezeichnet sind, kann durch eine vorzugsweise unterhalb der unteren Trummlage 37.2 angeordnete Antriebseinheit, beispielsweise mittels eines motorisch angetriebenen Reibrades erfolgen, das mit der unteren Trummlage 37.2 der Fördergurte 25 zusammenwirken kann. Der Antrieb der Fördergurte 25 kann jedoch auch direkt über die Laufrollen 45 und/oder die Umlenkrollen 23.1, 23.2 reibschlüssig bzw. kraftschlüssig erfolgen. Schließlich kann der Antrieb der Fördergurte 25 auch formschlüssig erfolgen. Hierzu können antriebsseitige Eingriffselemente 74 vorgesehen sein, die mit abtriebsseitigen Eingriffselementen 73 zusammenwirken, die wiederum an dem Fördergurt 25 befestigt sind (siehe Figuren 5 bis 8 und 10 bis 12).

Bei dem Kurvengurtförderer 21 sind im Bereich des Seitenrandes 55 der Gurtkurve 38 und bei dem geraden Gurtförderer 22 sind vorzugsweise im Bereich beider Seitenränder 55.1, 55.2 des Fördergurtes 25.2 jeweils eine Vielzahl von über die Gurtebenen 26.1, 26.2 hier in Richtung der von den Umlenkrollen 23 weg weisenden Seiten, vorstehende separate Klemmschuhe 35; 35.1 bis 35.5 befestigt, die beim Umlaufen der Fördergurte 25; 25.1, 25.2 jeweils mit diesem mitlaufen.

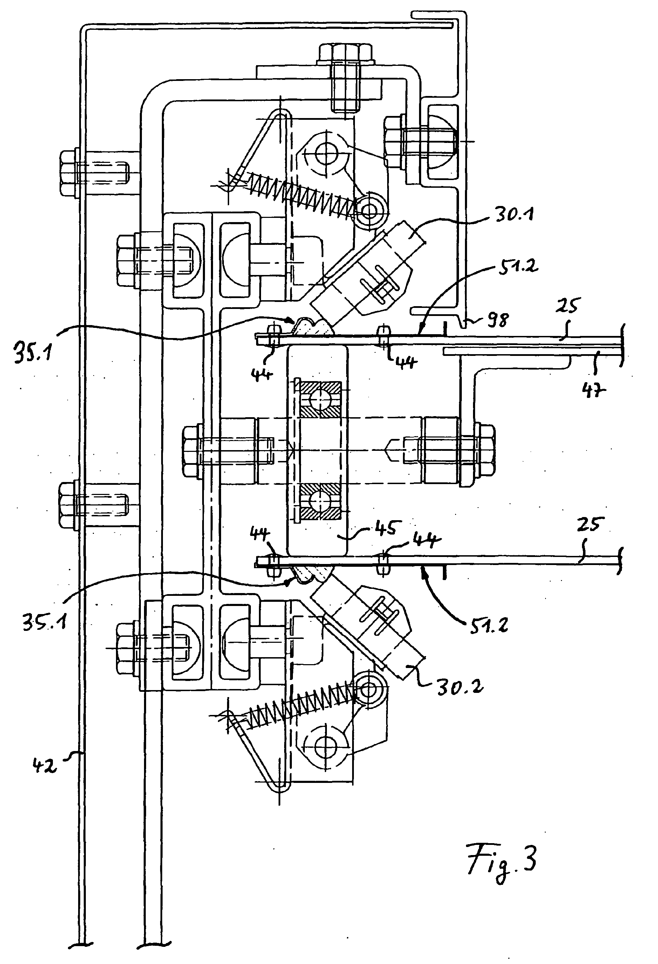

Jeder Klemmschuh 35; 35.1 bis 35.5 umfasst ein Befestigungsprofil 51; 51.1 bis 51.6 zum Befestigen des Klemmschuhs 35; 35.1 bis 35.5 an dem Fördergurt 25 und vorzugsweise ein sich über die Gurtebene 26.1 nach der von den Umlenkrollen 23 abgewandten Seite vorstehendes Klemmelement 36; 36.1, bis 36.4. Das Klemmelement 36; 36.1 bis 36.4 schließt sich vorzugsweise an das Befestigungsprofil 51; 51.1 bis 51.6 zum äußeren Rand des Fördergurtes 25 hin an. Wie in den Figuren 3 und 9 gezeigt, kann sich das Klemmelement 36.1 jedoch auch an das Befestigungsprofil 51.1 zum Gurtzentrum hin anschließen. Demgemäß können unterschiedliche Anordnungs- und Befestigungsvarianten zur Anwendung kommen.

Mithilfe des jeweiligen Klemmelements 36; 36.1 bis 36.4 ist eine sich in Förderrichtung 28 im Wesentlichen unterbrechungsfrei über die gesamte Länge des Fördergurtes 25 erstreckende, vorzugsweise endlose, elastisch-flexible bzw. flexible Führungsleiste 50 relativ zu dem jeweiligen Befestigungsprofil 51; 51.1 bis 51.6 festgeklemmt. Bei der Führungsleiste 50 handelt es sich um ein über die Gurtebene 26.1, 26.2 vorstehendes Führungselement 27, das vor seiner Befestigung an dem Fördergurt 25 separat handhabbar ist und das beim Umlaufen des Fördergurtes 25 mit diesem mitläuft und an dessen sich in Förderrichtung 28 des Fördergurtes 25 erstreckenden Führungsflächen 29 beim Umlaufen des Fördergurtes 25 zur Gurtebene 26.1, 26.2 geneigte Laufflächen 31 von drehbaren Führungsrollen 30; 30.1, 30.2 abrollen, so dass quer zur Förderrichtung des Fördergurtes 25 auftretende Querkräfte kompensierbar sind. Mit anderen Worten greifen also auf der zum Gurtzentrum 24.1, 24.2 hin weisenden Seite der Führungsleiste 50 an den zum Gurtzentrum 24.1, 24.2 hin geneigten Führungsflächen 29 der Führungsleiste 50, um Drehachsen 47 drehbare Stütz- bzw. Führungsrollen 30; 30.1, 30.2 beim Umlaufen des Fördergurtes 25 mit ihren zur Gurtebene 26.1, 26.2 geneigten Laufflächen an und rollen dort ab. Die Führungsrollen 30; 30.1, 30.2 können der oberen Trummlage 37.1 und/oder der unteren Trummlage 37.2 zugeordnet sein.

Die in den Figuren gezeigte Führungsleiste 50 ist als eine Wulstleiste, vorzugsweise mit einem Randwulst 78 zum Festklemmen an dem Klemmelement 36; 36.1 bis 36.4 und mit einem die Führungsfläche 29 für die Stütz- bzw. Führungsrollen 30; 30.1, 30.2 aufweisenden Führungswulst 72 gestaltet, die sich parallel zueinander in Förderrichtung 28 erstrecken. Es versteht sich jedoch, dass die Führungsleiste auch in weiten Grenzen beliebig anders gestaltet sein kann, also beispielsweise mit nur einem einzigen Wulst oder als Flachleiste.

Beim Umlauf der Fördergurte 25 können Längs- und Querkräfte 34 auftreten. Bei Kurvengurtförderern 21 treten im Betrieb insbesondere radial einwärts gerichtete Kräfte 34 auf. Diese Kräfte können durch die an der Führungsleiste 50 angreifenden Führungsrollen 30 aufgenommen bzw. kompensiert werden, die wiederum mithilfe der Klemmschuhe 35; 35.1 bis 35.5 an dem Fördergurt 25 festgeklemmt befestigt sind. Folglich betrifft die Erfindung einen Gurtbandförderer 20.1, 20.2, insbesondere einen Kurvengurtförderer 21, mit einem über Umlenkrollen 23 geführten endlosen Fördergurt 25, an dem ein über dessen Gurtebene 26.1, 26.2 vorstehendes Führungselement 27 befestigt ist, das vor seiner Befestigung an dem Fördergurt 25 separat handhabbar ist und das beim Umlaufen des Fördergurtes 25 mit diesem mitläuft und an dessen sich in Förderrichtung 28 des Fördergurtes 25 erstreckenden, vorzugsweise im Wesentlichen planen, insbesondere in Förderrichtung geraden Führungsflächen 29, beim Umlaufen des Fördergurtes 25 zur Gurtebene 26.1, 26.2 geneigte Laufflächen 31 von vorzugsweise drehbaren Stütz- bzw. Führungsrollen 30 anliegen, so dass quer zur Förderrichtung 28 des Fördergurtes 25 auftretende Querkräfte 34 kompensierbar sind, wobei in Förderrichtung 28 entlang dem Fördergurt 25 eine Vielzahl von separaten Klemmvorrichtungen, vorzugsweise in Form von Klemmschuhen 35 befestigt sind, die jeweils ein an dem Fördergurt 25 befestigtes Befestigungsprofil 51 und ein mit diesem verbundenes federelastisches Klemmelement 36 aufweisen, mittels dessen eine das Führungselement 27 ausbildende, sich in Förderrichtung 28 im Wesentlichen unterbrechungsfrei über die gesamte Länge des Fördergurtes 25 erstreckende, vorzugsweise endlose, elastisch-flexible Führungsleiste 50 relativ zu dem Befestigungsprofil 51 festgeklemmt ist.

Dabei kann, wie in den Figuren gezeigt, die Führungsleiste 50 unter elastischer Verformung des Klemmelements 36; 36.1 bis 36.3 durch die Führungsleiste 50 festgeklemmt sein. Ferner kann die Führungsleiste 50 vorzugsweise an dem Befestigungsprofil formschlüssig und/oder kraftschlüssig festgeklemmt sein.

Gemäß einem besonders bevorzugten Ausführungsbeispiel kann die Führungsleiste 50 formschlüssig und/oder kraftschlüssig auf einem zwischen dem Fördergurt 25 und der Führungsleiste 50 angeordneten Befestigungsprofil 51 festgeklemmt sein. Dadurch ist es möglich, die Führungsleiste separat und abgehoben von dem Fördergurt 25 an diesem mithilfe der Klemmelemente 36; 36.1 bis 36.4 zu befestigen.

Dabei kann die Führungsleiste 50 durch das Klemmelement 36; 36.1 bis 36.4 unter Behinderung und/oder Verhinderung einer Verschiebung der Führungsleiste 50 in Förderrichtung 28 relativ zu dem Befestigungsprofil 51 gesichert festgeklemmt sein, so dass die zwischen zwei benachbarten Klemmelementen 36; 36.1 bis 36.4 festgeklemmte Führungsleiste 50 beim Umlaufen des Fördergurtes 25 um die Umlenkrollen 23 in einem Bereich zwischen den benachbarten Klemmelementen 36; 36.1 bis 36.4 elastisch gedehnt wird, wie in Figur 6 gut ersichtlich.

Die Führungsleiste 50 besteht aus einem elastisch-flexiblen Werkstoff. Dies bedeutet, dass die Führungsleiste 50 vorzugsweise aus einem Werkstoff besteht, welcher die beim Umlaufen der Führungsleiste 50 mit dem Fördergurt 25 auftretenden, vergleichsweise großen Dehnungen, beispielsweise von mehr als 5 oder 10 Prozent, unter einer rein elastischen Verformung folgen kann, also ohne dass es zu einer bleibenden Deformation der Führungsleiste 50 kommt. Die Führungsleiste besteht vorzugsweise aus einem elastisch dehnbaren Kunststoff, insbesondere aus Polyurethan. Derartige Führungsleisten lassen sich besonders kostengünstig im Extrusionsverfahren herstellen. Abhängig von der jeweiligen Länge des Fördergurtes 25 kann die Führungsleiste 50 auf Länge geschnitten werden. Im Zuge einer möglichst geringen Geräuschentwicklung können die beiden Schnitt- bzw. Stoßstellen der Führungsleiste verklebt oder durch andere geeignet erscheinende Verbindungsverfahren oder Verbindungsmittel verbunden werden. Unabhängig davon kann es zweckmäßig sein, wenn die Führungsleiste 50 im montierten Zustand zumindest in den vorgenannten Stoßbereichen wenigstens teilweise von einem fest mit dem Klemmelement 36; 36.1 bis 36.4 und/oder fest mit dem Befestigungsprofil 51; 51.1 bis 51.4 verbundenen Verankerungselement 54 durchdrungen ist, das eine formschlüssige Fixierung der Führungsleiste 50 relativ zu dem Befestigungsprofil 51; 51.1 bis 51.4 bewirkt. Eine derartige Ausführungsvariante ist beispielhaft in Figur 12 gezeigt. Dort ist als Verankerungselement 54 ein Niet 91 vorgesehen, welcher hier durch eine Durchgangsöffnung 81 in dem Klemmelement 36.2 und eine gegenüberliegende Durchgangsöffnung 82 des Befestigungsprofils 51.4 sowie durch eine Durchgangsöffnung 59 des Randwulstes 78 der zwischenliegenden Führungsleiste 50 hindurchgesteckt ist.

Das Befestigungsprofil 51; 51.1 bis 51.4 ist vorzugsweise als eine dünne Befestigungsleiste 66 gestaltet. Das Befestigungsprofil 51, und vorzugsweise der gesamte Klemmschuh 36; 36.1 bis 36.4 kann besonders vorteilhaft aus einem gegenüber der Führungsleiste 50 vorzugsweise sehr viel härteren und steiferen Werkstoff bestehen. Von besonderem Vorteil kann es ferner sein, wenn das Klemmelement 36; 36.1 bis 36.4 und/oder das Befestigungsprofil 51; 51.1 bis 51.4 aus Federstahl bestehen. Es kann ferner vorteilhaft sein, wenn das Klemmeelement 36; 36.1 bis 36.4 und/oder das Befestigungsprofil 51; 51.1 bis 51.4 jeweils als ein dünnes Blechteil 67, 68 gestaltet sind. In den in den Figuren gezeigten Ausführungsbeispielen bestehen die Klemmschuhe 35; 35.1 bis 35.5 jeweils aus Federstahl, wobei das jeweilige Klemmelement 36; 36.1 bis 36.4 mit dem jeweiligen Befestigungsprofil 51; 51.1, 51.3 bis 51.6, das jeweils als dünne Befestigungsleiste 66 gestaltet ist, einstückig verbunden ist.

Mit Ausnahme des in Figur 12 gezeigten Ausführungsbeispiels, ist die Führungsleiste 50 mithilfe eines Klemmelements 36 zerstörungsfrei wiederlösbar festgeklemmt. Wenn die Führungsleiste 50 mithilfe des in Figur 12 gezeigten Niets 91 formschlüssig an dem Fördergurt 25 befestigt ist, ist ein Wiederlösen in diesem Bereich nur unter Zerstörung des Niet 91 möglich. Alternativ könnte selbstverständlich anstelle eines Niet 91 beispielsweise eine Mutter-Schrauben-Kombination verwendet werden. Es versteht sich ferner, dass entsprechende Verankerungselemente für eine formschlüssige Befestigung bzw. Fixierung der Führungsleiste 50 an dem Fördergurt 25 nicht nur in deren Stoßbereichen, sondern auch an mehreren oder sogar an allen Klemmschuhen 35 realisiert sein kann. Dies hätte den Vorteil, dass im Falle eines lokalen Versagens der Führungsleiste 50 dann dieser Schaden auf einen lokal eng begrenzten Bereich zwischen zwei benachbarten Klemmschuhen 35 begrenzt bleiben würde, ohne dass es zu einem großflächigen Ablösen der Führungsleiste 50 kommen würde, was mit einem Ausfall des kompletten Gurtbandförderers verbunden wäre.

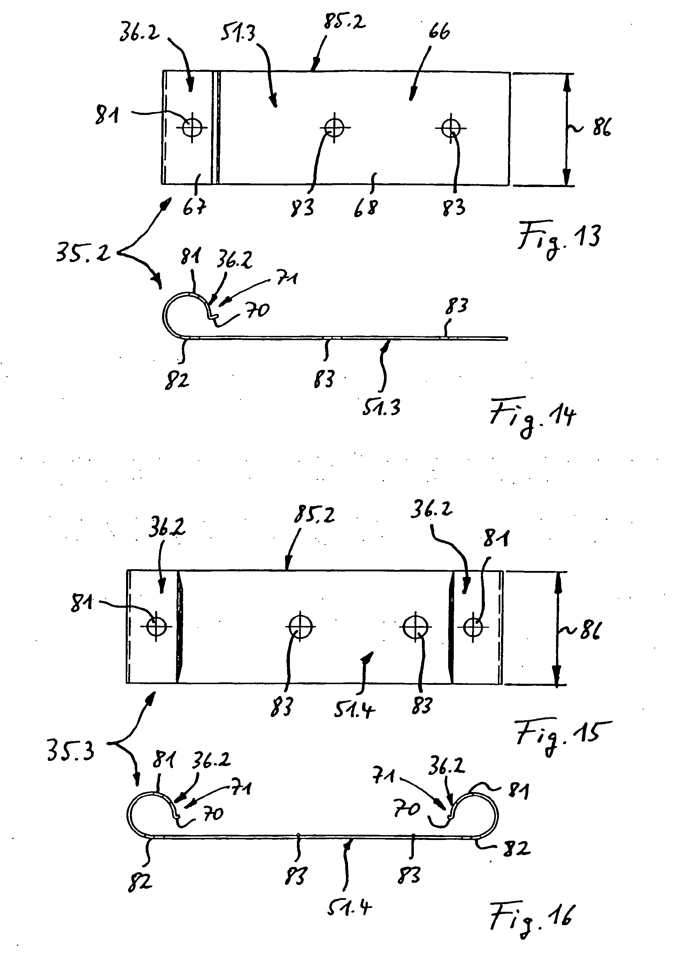

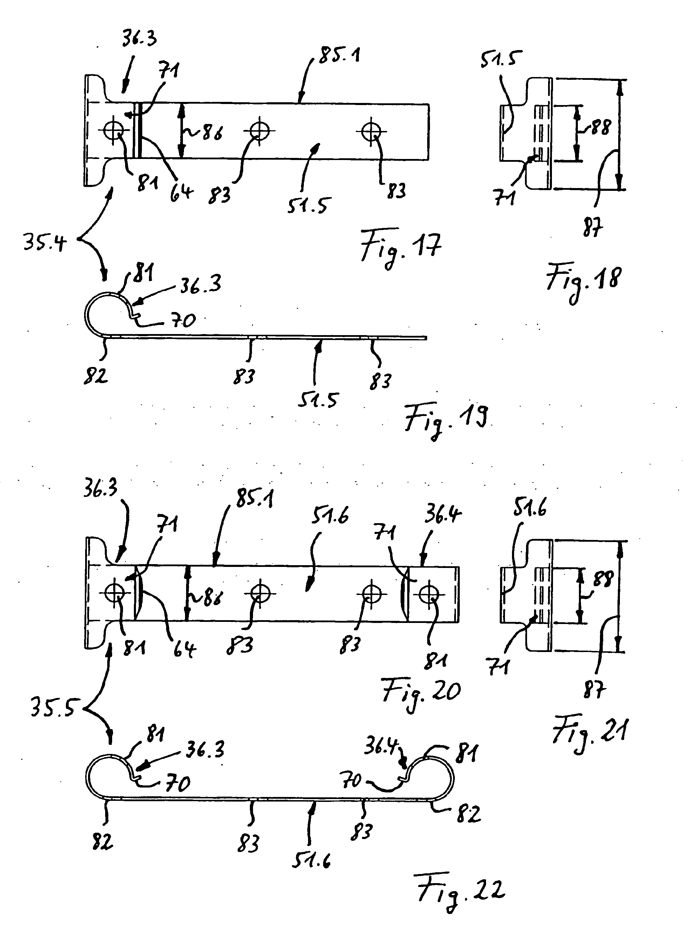

Wie insbesondere aus den Figuren 13 bis 22 in Verbindung mit den Figuren 9 bis 12 ersichtlich, kann das Klemmelement 36; 36.1 bis 36.4 vorteilhaft als Rast- bzw. Schnappelement 63 ausgebildet sein, an bzw. in den bzw. denen die Führungsleiste 50 eingerastet und/oder eingeschnappt ist. Dabei kann vorzugsweise das Rast- bzw. Schnappelement 63 derart auf die Führungsleiste 50 abgestimmt gestaltet sein, dass ein manuelles, vorzugsweise werkzeugfreies Einrasten bzw. Einschnappen der Führungsleiste 50 ermöglicht ist. Mithin kann die Führungsleiste 50 mit ihrem Randwulst 78 in Richtung des jeweiligen Öffnungsmaules des jeweiligen Klemmelements 36; 36.1 bis 36.4 unter gleichzeitiger elastischer Aufweitung des federelastischen Klemmelements eingeschoben werden, bis der Randwulst 78 dort einrastet bzw. einschnappt. Dabei kann das Rast- bzw. Schnappelement 63 derart auf die Führungsleiste 50 abgestimmt gestaltet sein, dass die Führungsleiste 50 manuell, vorzugsweise werkzeugfrei von dem jeweiligen Klemmschuh 35; 35.1 bis 35.5 lösbar ist.

Um das Zusammenfügen der Führungsleiste 50 mit dem Klemmschuh 35; 35.1 bis 35.5 zu erleichtern, kann vorgesehen sein, dass das Klemmelement 36; 36.1 bis 36.4 an seinem freien Ende 64 eine das Einführen der Führungsleiste 50 erleichternde, vorzugsweise abgekantete Einführschräge 70 aufweist. Wie ebenfalls in den in den Figuren gezeigten Ausführungsbeispielen gut ersichtlich, kann das Klemmelement 36; 36.1 bis 36.5 vorzugsweise mit einem den Rand der Führungsleiste 50 zumindest teilweise umgreifenden und/oder hintergreifenden Klemmteil 71 gestaltet sein. Dabei kann vorzugsweise vorgesehen sein, dass der Klemmteil 71 den Randwulst 78 der Führungsleiste 50 umgreift und hintergreift, wie in den Figuren gezeigt, oder nur umgreift oder nur hintergreift.

Von besonderem Vorteil kann es sein, wenn die Klemmschuhe 35.4, 35.5 in einer Projektionsebene parallel zur Gurtebene 26.1, 26.2 eine T-förmige Außenkontur 85.1 aufweisen (Figuren 17 bis 22). Alternativ könnten die Klemmschuhe auch eine doppel-T-förmige Außenkontur aufweisen. Ferner kann vorgesehen sein, dass das Befestigungsprofil 51.5, 51.6 eine mittlere Breite aufweist, die kleiner ist als die mittlere Breite des Klemmelements 36.3 (siehe insbesondere Figuren 17 und 20).

Ferner kann vorgesehen sein, dass das Klemmelement 36.3 zumindest in Teilbereichen eine Breite 87 aufweist, die vorzugsweise sehr viel größer ist als die mittlere Breite 86 des Befestigungsprofils 51.5, 51.6. Außerdem kann vorgesehen sein, dass das Klemmelement 36.3 an seinem freien Ende 64 eine Breite 88 aufweist, die vorzugsweise sehr viel kleiner ist als die Breite 87 des Klemmelements 36.3 in einem Übergangsbereich zwischen dem Klemmelement 36.3 und dem Befestigungsprofil 51.5, 51.6, wie in dem Ausführungsbeispiel gemäß den Figuren 17 bis 22 gut ersichtlich.

Alternativ kann vorgesehen sein, dass die Klemmschuhe 35.1 bis 35.3 in einer Projektionsebene parallel zur Gurtebene 26.1, 26.2 eine im Wesentlichen rechteckigen Außenkontur aufweisen (Figuren 13 bis 16). Es kann ferner vorgesehen sein, dass die Klemmschuhe 35 in Förderrichtung 28 eine mittlere Breite 94 aufweisen, die kleiner ist als der wirksame Umlenkdurchmesser 65 der Umlenkrolle 23. Bevorzugt kann vorgesehen sein, dass die mittlere Breite 94 der Klemmschuhe 35 gleich groß oder kleiner ist als der wirksame Umlenkradius 96 der Umlenkrolle 23, wie in dem Ausführungsbeispiel gemäß Figur 6 gezeigt.

Die Befestigung der Klemmschuhe 35; 35.1 bis 35.5 über ihr jeweiliges Befestigungsprofil 51.1 bis 51.6 erfolgt vorzugsweise derart, dass zwischen dem Befestigungsprofil und dem Fördergurt 25 wenigstens eine punktförmige Befestigungsstelle 56 ausgebildet ist, wobei vorzugsweise eine quer zur Förderrichtung verlaufende linienförmige Befestigungsstelle 57 ausgebildet ist (Fig. 1). Dadurch lassen sich auch kleine Umlenkradien von Umlenkrollen bei hohen Umlaufgeschwindigkeiten bei einem über lange Zeit störungsfreien Betrieb des Gurtbandförderers realisieren. Zweckmäßigerweise kann das Befestigungsprofil 51 mittels Nieten 44 oder Schrauben 89 an dem Fördergurt 25 befestigt sein. Eine Befestigung mithilfe von Nieten 44 ist anhand der in den Figuren 3, 4 und 9 gezeigten Ausführungsbeispielen ersichtlich. Eine Befestigung mithilfe von Schrauben ist insbesondere in den Figuren 2, 5, 7, 8 und 10 bis 12 gezeigt.

Die Klemmschuhe 35 sind vorzugsweise im Bereich des Seitenrandes 55 des Vordergurtes befestigt. Dabei kann es zweckmäßig sein, wenn das Befestigungsprofil 51.1 eine den Seitenrand 55 des Vordergurtes 25 hintergreifende Nase 60 aufweist (Figuren 3 und 9). Dadurch lässt sich eine besonders präzise und vordefinierte Befestigungsposition des Klemmschuhs 35.1 einerseits und der Führungsleiste 50 andererseits sicherstellen.

Es ist ferner vorteilhaft, wenn das Befestigungsprofil 51 auf einer ersten Seite 61 des Fördergurtes 25 angeordnet ist und über einen, auf der von der ersten Seite 61 des Fördergurtes 25 weg weisenden zweiten Seite 62 des Fördergurtes angeordneten Befestigungskörper 65 befestigt ist. Eine derartige Ausführungsvariante ist besonders in Verbindung mit einem formschlüssigen Antrieb des Gurtbandförderers von Vorteil (siehe z. B. Figur 6).

Die Befestigung eines derartigen Befestigungskörpers kann auf vielfältige Art und Weise erreicht werden. Beispielsweise kann das Befestigungsprofil und/oder der Befestigungskörper mithilfe wenigstens eines in eine oder durch eine quer zur Gurtebene 26.1, 26.2 ausgebildete Durchgangsöffnung in dem Fördergurt ein- oder hindurchsteckbares Rastelelement an dem Fördergurt befestigt sein. Dabei kann vorgesehen sein, dass das Rastelement ein männliches Steckelement umfasst, das in einem zugehörigen weiblichen Aufnahmeelement rastbar ist, so dass in montiertem Zustand das Steckelement an oder in dem Aufnahmeelement unter Ausbildung einer festen Verbindung zu dem dann zwischenliegenden Fördergurt 25 eingerastet ist. Dabei kann vorgesehen sein, dass das Befestigungsprofil das Steckelement umfasst und dass der Befestigungskörper das Aufnahmeelement umfasst. Alternativ kann vorgesehen sein, dass der Befestigungskörper das Steckelement umfasst und dass das Befestigungsprofil das Aufnahmeelement umfasst. Schließlich kann es ferner zweckmäßig sein, wenn der Befestigungskörper eine den Außenrand 55 des Fördergurtes 25 hintergreifende Nase aufweist. Schließlich kann es vorteilhaft sein, wenn das Befestigungsprofil über einen den Seitenrand 55 des Fördergurtes 25 umgreifenden Randteil mit dem jeweiligen Befestigungskörper verbunden ist. Dabei kann zweckmäßigerweise der Randteil mit dem Befestigungsprofil und dem Befestigungskörper einstückig verbunden sein. Schließlich kann vorgesehen sein, dass der Randteil als Scharnier gestaltet ist, um welches das Befestigungsprofil und/oder der Befestigungskörper zum Zwecke der Befestigung an dem Fördergurt 25 geschwenkt wird. Dabei kann es zweckmäßig sein, wenn das Scharnier nach der Befestigung des Befestigungsprofils an dem Fördergurt im Bereich des Seitenrandes 55 des Fördergurtes 25 angeordnet ist.

Gemäß einer besonders bevorzugten Ausgestaltung der Erfindung kann vorgesehen sein, dass der Befestigungskörper 65 mit einem abtriebsseitigen Eingriffselement 73 gestaltet ist, das dazu bestimmt ist, mit einem antriebsseitigen Eingriffselement 74 in Wirkverbindung gebracht zu werden, um eine Bewegung des Fördergurtes 25 in Förderrichtung zu bewirken. Besonders vorteilhaft ist es, wenn der Befestigungskörper 65 mit einem gurtseitigen Zahn 75.1 gestaltet ist, der mit Zähnen 75.2 eines antriebsseitigen Zahnkranzes 76 in Eingriff bringbar ist, um einen formschlüssigen Antrieb des Fördergurtes zu bewirken. Derart vorteilhafte Ausführungsvarianten gehen aus den Figuren 2, 5 bis 8 sowie 10 bis 12 hervor.

Es kann ferner von Vorteil sein, wenn jeweils zwei Klemmschuhe 35 einander gegenüberliegend an dem zwischenliegenden Fördergurt 25 befestigt sind. Schließlich kann es von Vorteil sein, wenn die Führungsleiste 50 Führungsflächen für die Führungsrollen 30, 30.1, 30.2 aufweist, die in einer senkrecht zur Gurtebene und senkrecht zur Förderrichtung verlaufenden Schnittebene konvex gewölbt sind.

Gemäß einem vorteilhaften Ausführungsbeispiel der Erfindung kann vorgesehen sein, dass das Befestigungsprofil 51.2, 51.4 im Bereich seiner von den Führungsflächen 29 der Führungsleiste 50 weg weisenden und in Richtung des Gurtzentrums 24 weisenden Endes jeweils ein über die Gurtebene 26.1 vorstehenden Dichtschenkel 97 aufweisen, der einen ortsfest angeordneten und sich quer zur Gurtebene 26.1 in Richtung auf den Fördergurt 25 erstreckenden Abdeck-Schenkel 98 vertikal überlappt. Ein derartiges Ausführungsbeispiel geht aus den Figuren 3 und 9 einerseits sowie aus den Figuren 7 und 8 andererseits hervor.

In dem letztgenannten Falle kann also vorteilhafterweise vorgesehen sein, dass das Befestigungsprofil 51.3 bis 51.6 mit einem weiteren Klemmelement 36.2, 36.3 fest verbunden ist, mittels dem ein sich in Förderrichtung 28, vorzugsweise im Wesentlichen unterbrechungsfrei über die gesamte Länge des Fördergurtes 25 erstreckendes, vorzugsweise endloses elastisch-flexibles Dichtband 92 relativ zu dem Befestigungsprofil 51.3 bis 51.6 festgeklemmt ist, das einen ortsfest angeordneten und sich quer zur Gurtebene 26.1 in Richtung auf den Fördergurt 25 erstreckenden Abdeckschenkel 98 vertikal überlappt.

Durch die vorgenannten Maßnahmen lässt sich eine vorteilhafte Abdichtung bzw. Abgrenzung von der Förderstrecke zu seitlichen Führungs- und/oder Antriebsteilen hin erreichen. Wenn beispielsweise auf dem Fördergurt 25 vergleichsweise kleine Stückgüter befördert werden oder Stückgüter, welche derartige Kleinteile, beispielsweise Schrauben und dergleichen Befestigungsmittel enthalten oder wenn beispielsweise der Gurtbandförderer im Flughafenbereich eingesetzt wird, wo Gepäckgüter wie Koffer mit Adressanhängern und dergleichen dünnen Teilen befördert werden, gelingt durch die vorgenannten Maßnahmen eine erfolgreiche Abschottung bzw. Abdichtung zu der Führungsleiste 50 hin und damit zu den Führungsrollen 30; 30.1, 30.2 hin. Folglich kann es im Zuge der Förderung entlang der Förderstrecke nicht zu einem unerwünschten Eindringen der genannten Teile in diesen Bereich kommen, die ansonsten zu einem Verklemmen, einer Beschädigung, bis hin zu einem Komplettausfall des Gurtbandförderers führen können. Dabei kann vorgesehen sein, dass das Klemmelement 36.2, 36.3 für die Führungsleiste 50 und das Klemmelement 36.2, 36.3, 36.4 für das Dichtband 92 gleichartig oder gleich gestaltet sind.

Schließlich kann vorgesehen sein, dass der Klemmschuh 35.2, 35.4 für die Führungsleiste 50 und ein das Klemmelement 36.2, 36.3 für das Dichtband 92 und ein damit verbundenes Befestigungsprofil 51.3 enthaltender weiterer Klemmschuh 35.2, 35.4 für das Dichtband 92 gleichartig oder gleich gestaltet sind. Schließlich kann vorgesehen sein, dass das Befestigungsprofil 51.3, 51.5 für das Klemmelement 36.2, 36.3 für die Führungsleiste 50 und dass das Befestigungsprofil 51.3, 51.5 für das Klemmelement 36.2, 36.3, 36.4 für das Dichtband 92 übereinanderliegend an dem Fördergurt 25 befestigt sind. Außerdem kann vorgesehen sein, dass das Klemmelement 36.2, 36.3 für die Führungsleiste 50 und das Klemmelement 36.2, 36.3, 36.4 für das Dichtband 92 einstückig mit einem Befestigungsprofil 51.4, 51.6 verbunden sind.

Schließlich kann vorgesehen sein, dass die Führungsleiste 50 und/oder das Dichtband 92 aus einem zäh-harten, jedoch elastisch-dehnbaren Kunststoff, vorzugsweise aus Polyurethan bestehen. Ferner kann vorgesehen sein, dass die Führungsleiste (50) als Wulstleiste gestaltet ist.

Vorteilhafte Gestaltungen und Anordnungen unterschiedlicher Ausführungsvarianten von Klemmschuhen 35; 35.1 bis 35.5 werden nachfolgend anhand der Figuren 9 bis 22 beschrieben: In Figur 9 ist ein Klemmschuh 35.1 gezeigt, der, wie alle Klemmschuhe 35, zu seiner Befestigung an dem Fördergurt 25 ein Befestigungsprofil 51.1 und ein mit diesem einstückig verbundenes Klemmelement 36.1 umfasst. Ebenso wie alle anderen in den Figuren gezeigten Ausführungsbeispiele von Klemmschuhen 35, ist der Klemmschuh 35.1 als dünnes Blechteil aus Federstahl gestaltet. Derartige Federstahlklemmschuhe können beispielsweise eine Dicke von kleiner als 1 mm, vorzugsweise kleiner oder gleich 0,5 mm aufweisen.

Der in Figur 9 gezeigte Klemmschuh 35.1 weist an seinem von dem freien Klemmende weg weisenden Ende eine hier um einen Winkel von 90 Grad abgebogene bzw. abgekantete Nase 60 auf, die den Außen- bzw. Seitenrand 55 des Fördergurtes 55 übergreift. Der Klemmschuh 35.1 ist mithilfe einer Niet 44 an dem Fördergurt 25 befestigt. In dem gezeigten Ausführungsbeispiel ist ein weiteres, separates Befestigungsprofil 51.2 vorgesehen. Dieses ist hier mithilfe von zwei Nieten 44 an dem Fördergurt 25 befestigt und dient als Abstützung sowohl für das Befestigungsprofil 51.1 des Klemmschuhs 35.1 als auch für die Basis der Führungsleiste 50 zum Fördergurt 25 hin. Dabei überlappt das Befestigungsprofil 51.1 des Klemmschuhs 35.1 das Befestigungsprofil 51.2. Das Befestigungsprofil 51.2 weist an seinem freien Ende einen über die Gurtebene 26.1 vorstehenden Dichtschenkel 97 auf. In dem gezeigten Ausführungsbeispiel ist der Klemmschuh 35.1 im Bereich des Seitenrandes 55 des Fördergurtes 25 derart angeordnet, dass sich das Klemmelement 36.1 in Richtung zum Gurtzentrum 24 hin erstreckt.

In Figur 10 ist ein zweites Ausführungsbeispiel eines Klemmschuhs 35.2 gezeigt. Dabei ist jedoch im Unterschied zu dem vorerwähnten Ausführungsbeispiel, das mit dem Klemmelement 36.2 für die Führungsleiste 50 verbundene Befestigungsprofil 51.3 relativ zu der Führungsleiste 50 zum Gurtzentrum 24 hin an dem Fördergurt 25 befestigt, und zwar hier mithilfe von Schrauben 89.

Dabei ist das als Abstützung für die Führungsleiste 50 gegenüber dem Fördergurt 25 dienende Befestigungsprofil 51.3 einstückig in das Klemmelement 36.2 verbunden. Es sind also nicht, wie in dem in Figur 9 gezeigten Ausführungsbeispiel, zwei separate und sich teilweise überlappende Befestigungsprofile 51.1, 51.2 vorgesehen, sondern es ist nur ein einziges Befestigungsprofil 51.3 angeordnet.

In dem in Figur 10 gezeigten Ausführungsbeispiel ist ein weiterer Klemmschuh 35.2 vorgesehen, der vorzugsweise zum Festklemmen eines Dichtbandes 92 dient. Dieser Klemmschuh 35.2 ist hier identisch gestaltet wie der Klemmschuh 35.2 für die Führungsleiste 50. Die Befestigung der beiden Klemmschuhe 35.2 erfolgt über zwei Schrauben 89 derart, dass der Befestigungsschenkel 51.3 des Klemmschuhs 35.2 für das Dichtband 92 unmittelbar auf dem Fördergurt anliegt, während der Befestigungsschenkel 51.3 des Klemmschuhs 35.2 für die Führungsleiste 50 den Befestigungsschenkel 51.3 des Klemmschuhs 35.2 für das Dichtband 92 teilweise überlappend auf diesem befestigt ist. Zum Zwecke der Befestigung mithilfe der beiden Schrauben 89 und der korrespondierenden Muttern 90 weisen die Befestigungsschenkel 51.3, wie beispielsweise in Figur 13 gezeigt, entsprechende Durchgangsöffnungen 83 auf.

Mithilfe der Schrauben 89 und der Muttern 90 ist außerdem ein Befestigungskörper 65 an dem Fördergurt 25 befestigt, dessen Querschnitt in Figur 6 gezeigt ist und der hier eine halbzylindrische Außenkontur aufweist. Der Befestigungskörper 65 dient als ein abtriebsseitiges Eingriffselement 73 in Form eines Zahns 75, der mit einem antriebsseitigen Eingriffselement 74 eines Zahnkranzes 76 in Eingriff bringbar ist, wie ebenfalls in Figur 6 gezeigt. Es versteht sich, dass der Zahn 75 auch anders gestaltet sein kann, beispielsweise mit Evolventenflanken und dergleichen Zahnformgestaltungen.

Ein weiteres Ausführungsbeispiel eines Klemmschuhs 35.3 und dessen Befestigung an einem Fördergurt 25 ist in Figur 11 gezeigt. Dabei ist nur ein einziges Befestigungsprofil 51.4 vorgesehen, das einstückig mit beiderends desselben angeordneten, hier identisch gestalteten Klemmelementen 36.2 verbunden ist. Das eine Klemmelement 36.2 dient hier zum Festklemmen einer Führungsleiste 50 und das anderen Klemmelement 36.2 dient hier zum Festklemmen eines Dichtbandes 92. Im übrigen ist der Klemmschuh 35.3 hier gleich gestaltet und befestigt, wie in dem Ausführungsbeispiel gemäß Figur 10.

In Figur 12 ist wiederum ein Klemmschuh 35.3 gemäß Figur 11 gezeigt. In diesem Ausführungsbeispiel ist zusätzlich eine formschlüssige Befestigung der Führungsleiste 50 an dem Fördergurt 25 mithilfe eines Verankerungselements 54 vorgesehen. In dem gezeigten Ausführungsbeispiel handelt es sich dabei um den Niet 91. Zu diesem Zwecke weisen sowohl das Klemmelement 36.2 als auch das Befestigungsprofil 51.4 des Klemmschuhs 35.3 jeweils eine Durchgangsöffnung 81, 82 auf, die in dem in Figur 12 gezeigten montierten Zustand vertikal übereinander angeordnet sind. Ferner weist auch die Führungsleiste 50 eine Durchgangsöffnung 59 auf, wobei der Niet 91 durch die vorgenannten Durchgangsöffnungen 81, 59, 82 hindurchgesteckt ist. Entsprechende Durchgangsöffnungen 81, 82 sowohl in den Klemmelementen 36.2 bis 36.4 als auch in den Befestigungsprofilen 51.4 bis 51.6 sind in den weiteren Ausführungsbeispielen gemäß den Figuren 13 bis 22 beispielhaft gezeigt.

Ausführungsbeispiele eines Klemmschuhs 35.2, 35.4 mit einem einzigen Klemmelement 36.2, 36.3 sind in den Figuren 13 und 14 sowie 17 bis 19 gezeigt, während Ausführungsbeispiele von Klemmschuhen 35.3, 35.5 mit zwei Klemmelementen 36.2; 36.3, 36.4 an den freien Enden der Klemmschuhe 35.3, 35.5 in den Figuren 15 und 16 sowie 20 bis 22 gezeigt sind.

Dabei weisen die in den Figuren 13 bis 16 gezeigten Klemmschuhe 35.1, 35.3 in den Ansichten gemäß den Figuren 13 und 15 bzw. montiert auf dem Förderband 25 in einer Projektionsebene parallel zur Gurtebene 26.1, 26.2, eine im Wesentlichen rechteckigen Außenkontur 85.3 auf. Die Klemmelemente 36.2 und die Befestigungsprofile 51.3 sowie 51.4 weisen also hier eine gleiche Breite 86 von beispielsweise 20 mm auf.

Im Unterschied dazu weist der in den Figuren 17 bis 19 gezeigte Klemmschuh 35.4 in der Ansicht gemäß Figur 17 bzw. montiert an dem Fördergurt 25 in einer Projektionsebene parallel zur Gurtebene 26.1, 26.2, eine T-förmige Außenkontur 85.1 auf. Gleiches gilt für den Klemmschuh 35.5 gemäß dem in den Figuren 20 bis 22 gezeigten Ausführungsbeispiel. Das als Befestigungsleiste gestaltete Befestigungsprofil 51.5 bzw. 51.6 weist bis auf Übergangsbereiche zu den jeweiligen Klemmelementen 36.3, 36.4 hin, parallele Außenkonturen und eine mittlere Breite 86 auf. Demgegenüber weisen die dort links gezeigten Klemmelemente 36.3 in Teilbereichen zwischen dem Befestigungsprofil 51.5 bzw. 51.6 und ihrem freien Klemm-Ende eine Breite 87 auf, die vorzugsweise sehr viel größer ist als die mittlere Breite 86 des Befestigungsprofils 51.5 bzw. 51.6.

An ihren freien Klemm-Enden weisen die Klemmelemente 36.3 eine Breite 88 auf, die vorzugsweise sehr viel kleiner ist als die Breite 87 der Klemmelemente 36.3 in dem vorgenannten Übergangsbereich zum Befestigungsprofil 51.5 bzw. 51.6 hin, und die hier der Breite 86 der Befestigungsprofile 51.5, 51.6 entspricht. Diese Gestaltung der Führungsschuhe 35.4 und 35.5 ermöglicht besonders vorteilhafte Klemmverhältnisse sowie Möglichkeiten für Umlenkungen um enge Umlenkradien einerseits und günstige Kraftüberleitungs-Verhältnisse an Umlenkstellen, insbesondere im Bereich der Umlenkrollen 23 andererseits.

Der in den Figuren 20 bis 22 gezeigte Klemmschuh 35.3 weist ein weiteres Klemmelement 36.4 vorzugsweise für das Dichtband 92 auf. Dieses Klemmelement weist hier durchgehend und zum Befestigungsprofil 51.6 hin eine Breite 88 auf, die der Breite 86 des Befestigungsprofils 51.6 entspricht.

## Patentansprüche

1. Gurtbandförderer (27), insbesondere Kurvengurtförderer (21), mit einem über Umlenkrollen (23) geführten endlosen Fördergurt (25), an dem ein über dessen Gurtebene (26.1, 26.2) vorstehendes Führungselement (27) befestigt ist, das vor seiner Befestigung an dem Fördergurt (25) separat handhabbar ist und das beim Umlaufen des Fördergurtes (25) mit diesem mitläuft und an dessen sich in Förderrichtung (28) des Fördergurtes (25) erstreckenden Führungsflächen (29) beim Umlaufen des Fördergurtes (25) zur Gurtebene (26.1, 26.2) geneigte Laufflächen (31) von drehbaren Führungsrollen (30.1, 30.2) abrollen, so dass quer zur Förderrichtung (28) des Fördergurtes (25) auftretende Querkräfte (34) kompensierbar sind,
**dadurch gekennzeichnet,**
**dass** in Förderrichtung (28) entlang dem Fördergurt (25) eine Vielzahl von separaten Klemmschuhen (35; 35.1 bis 35.5) befestigt sind, die jeweils ein an dem Fördergurt (25) befestigtes Befestigungsprofil (51; 51.1 bis 51.6) und ein mit diesem verbundenes federelastisches Klemmelement (36; 36.1 bis 36.4) aufweisen, mittels dessen eine das Führungselement (27) ausbildende, sich in Förderrichtung (28) im Wesentlichen unterbrechungsfrei über die gesamte Länge des Fördergurtes (25) erstreckende, elastisch-flexible Führungsleiste (50) relativ zu dem Befestigungsprofil (51; 51.1 bis 51.6) festgeklemmt ist.

2. Gurtbandförderer nach Anspruch 1, **dadurch gekennzeichnet, dass** die Führungsleiste (50) unter elastischer Verformung des Klemmelements (36; 36.1 bis 36.4) durch die Führungsleiste (50) festgeklemmt ist.

3. Gurtbandförderer nach einem der Ansprüche 1 oder 2, **dadurch gekennzeichnet, dass** die Führungsleiste (50) formschlüssig und/oder kraftschlüssig an dem Befestigungsprofil (51; 51.1 bis 51.6) festgeklemmt ist.

4. Gurtbandförderer nach einem der Ansprüche 1 bis 3, **dadurch gekennzeichnet, dass** die Führungsleiste (50) durch das Klemmelement (36; 36.1 bis 36.4) unter Behinderung und/oder Verhinderung einer Verschiebung der Führungsleiste (50) in Förderrichtung (28) relativ zu dem Befestigungsprofil (51; 51.1 bis 51.6) gesichert festgeklemmt ist, so dass die zwischen zwei benachbarten Klemmelementen (36; 36.1 bis 36.4) festgeklemmte Führungsleiste (50) beim Umlaufen des Fördergurtes (25) um die Umlenkrollen (23) in einem Bereich zwischen den benachbarten Klemmelementen (36; 36.1 bis 36.4) elastisch gedehnt wird.

5. Gurtbandförderer nach einem der Ansprüche 1 bis 4, **dadurch gekennzeichnet, dass** die Führungsleiste (50) im montierten Zustand zumindest in Stoßbereichen wenigstens teilweise von einem fest mit dem Klemmelement (36.2) und/oder fest mit dem Befestigungsprofil (51.4) verbundenen Verankerungselement (54) durchdrungen ist, das eine formschlüssige Fixierung der Führungsleiste (50) relativ zu dem Befestigungsprofil (51.4) bewirkt.

6. Gurtbandförderer nach einem der Ansprüche 1 bis 5, **dadurch gekennzeichnet, dass** das Klemmelement (36; 36.1 bis 36.4) und/oder das Befestigungsprofil (51; 51.1 bis 51.6) aus Federstahl bestehen.

7. Gurtbandförderer nach einem der Ansprüche 1 bis 6, **dadurch gekennzeichnet, dass** die Führungsleiste (50) wieder lösbar festgeklemmt ist.

8. Gurtbandförderer nach einem der Ansprüche 1 bis 7, **dadurch gekennzeichnet, dass** die Führungsleiste (50) zerstörungsfrei wieder lösbar festgeklemmt ist.

9. Gurtbandförderer nach einem der Ansprüche 7 oder 8, **dadurch gekennzeichnet, dass** die Führungsleiste (50) bis auf Stoßbereiche wieder lösbar festgeklemmt ist.

10. Gurtbandförderer nach einem der Ansprüche 1 bis 9, **dadurch gekennzeichnet, dass** das Klemmelement (36; 36.1 bis 36.4) einstückig mit dem Befestigungsprofil (51; 51.1 bis 51.6) verbunden ist.

11. Gurtbandförderer nach einem der Ansprüche 1 bis 10, **dadurch gekennzeichnet, dass** das Klemmelement (36; 36.1 bis 36.4) als Rast- und/oder Schnappelement (63) ausgebildet ist, an oder in dem bzw. denen die Führungsleiste (50) eingerastet und/oder eingeschnappt ist.

12. Gurtbandförderer nach einem der Ansprüche 1 bis 11, **dadurch gekennzeichnet, dass** das Klemmelement (36.2, 36.3, 36.4) an seinem freien Ende (64) eine das Einführen der Führungsleiste (50) erleichternde Einführschräge (70) aufweist.

13. Gurtbandförderer nach einem der Ansprüche 1 bis 12, **dadurch gekennzeichnet, dass** die Klemmschuhe (35.4, 35.5) in einer Projektionsebene parallel zur Gurtebene (26.1, 26.2) eine T- oder doppel-T-förmige Außenkontur (85.1) aufweisen.

14. Gurtbandförderer nach einem der Ansprüche 1 bis 13, **dadurch gekennzeichnet, dass** die Klemmschuhe (35; 35.1 bis 35.5) in Förderrichtung (28) eine mittlere Breite (94) aufweisen, die kleiner ist als der wirksame Umlenkdurchmesser (95) der Umlenkrolle (23).

15. Gurtbandförderer nach Anspruch 14, **dadurch gekennzeichnet, dass** die mittlere Breite (94) der Klemmschuhe (35; 35.1 bis 35.5) gleich groß oder kleiner ist als der wirksame Umlenkradius (96) der Umlenkrolle (23).

16. Gurtbandförderer nach einem der Ansprüche 1 bis 15, **dadurch gekennzeichnet, dass** zwischen dem Befestigungsprofil (51; 51.1 bis 51.6) und dem Fördergurt (25) wenigstens eine punktförmige Befestigungsstelle (56) ausgebildet ist.

17. Gurtbandförderer nach einem der Ansprüche 1 bis 16, **dadurch gekennzeichnet, dass** zwischen dem Befestigungsprofil (51; 51.1 bis 51.6) und dem Fördergurt (25) eine quer zur Förderrichtung (28) verlaufende linienförmige Befestigungsstelle (57) ausgebildet ist.

18. Gurtbandförderer nach einem der Ansprüche 1 bis 17, **dadurch gekennzeichnet, dass** das Befestigungsprofil (51.3 bis 51.6) mit einem weiteren Klemmelement (36.2, 36.4) fest verbunden ist, mittels dem ein sich in Förderrichtung (28) vorzugsweise im Wesentlichen unterbrechungsfrei über die gesamte Länge des Fördergurtes (25) erstreckendes elastisch-flexibles Dichtband (92) relativ zu dem Befestigungsprofil (51.3 bis 51.6) festgeklemmt ist, das einen ortsfest angeordneten und sich quer zur Gurtebene (26.1) in Richtung auf den Fördergurt (25) erstreckenden Abdeckschenkel (98) vertikal überlappt.

## Claims

1. Belt band conveyor (27), particularly curved belt conveyor (21), with an endless conveyor belt (25), which is guided over deflecting rollers (23) and to which is fastened a guide element (27), which projects above the belt plane (26.1, 26.2) of the conveyor belt and can be separately handled prior to fastening thereof to the conveyor belt (25) and which during circulation of the conveyor belt (25) co-runs therewith and running surfaces (31), which are inclined relative to the belt plane (26.1, 26.2), of rotatable guide rollers (30.1, 30.2) roll along the guide surfaces (29), which extend in conveying direction (29) of the conveyor belt (25), of the guide element during circulation of the conveyor belt (25) so that compensation can be provided for transverse forces (34) which arise transversely to the conveying direction (28) of the conveyor belt (25), **characterised in that** a plurality of separate clamping shoes (35; 35.1 to 35.5) is fastened in conveying direction (28) along the conveyor belt (25) and each shoe comprise a fastening profile (51; 51.1 to 51.6) fastened to the conveyor belt (25) and a resilient clamping element (36; 36.1 to 36.4) connected with the profile, by means of which clamping element a resilient-flexible guide strip (50), which forms the guide element (27) and extends in conveying direction (28) substantially without interruption over the entire length of the conveyor belt (25), is fixedly clamped relative to the fastening profile (51; 51.1 to 51.6).

2. Belt band conveyor according to claim 1, **characterised in that** the guide strip (50) is fixedly clamped under elastic deformation of the clamping element (36; 36.1 to 36.4) by the guide strip (50).

3. Belt band conveyor according to one of claims 1 and 2, **characterised in that** the guide strip (50) is fixedly clamped to the fastening profile (51; 51.1 to 51.6) in shape-locking and/or force-locking manner.

4. Belt band conveyor according to one of claims 1 to 3, **characterised in that** the guide strip (50) is fixedly clamped by the clamping element (36; 36.1 to 36.4) to be secured relative to the fastening profile (51; 51.1 to 51.6) with hindrance and/or prevention of displacement of the guide strip (50) in conveying direction (28) so that the guide strip (50) fixedly clamped between two adjacent clamping elements (36; 36.1 to 36.4) is resiliently stretched in a region between the adjacent clamping elements (36; 36.1 to 36.4) during circulation of the conveyor belt (25) around the deflecting rollers (23).

5. Belt band conveyor according to one of claims 1 to 4, **characterised in that** the guide strip (50) in the mounted state is penetrated at least in the butt joint regions at least partly by an anchoring element (54) which is fixedly connected with the clamping element (36.2) and/or with the fastening profile (51.4) and which produces a shape-locking fixing of the guide strip (50) relative to the fastening profile (51.4).

6. Belt band conveyor according to one of claims 1 to 5, **characterised in that** the clamping element (36; 36.1 to 36.4) and/or the fastening profile (51; 51.1 to 51.6) consists or consist of spring steel.

7. Belt band conveyor according to one of claims 1 to 6, **characterised in that** the guide strip (50) is fixedly clamped to be detachable again.

8. Belt band conveyor according to one of claims 1 to 7, **characterised in that** the guide strip (50) is fixedly clamped to be detachable again without destruction.

9. Belt band conveyor according to one of claims 7 and 8, **characterised in that** the guide strip (50) is fixedly clamped to be detachable again as far as butt joint regions.

10. Belt band conveyor according to one of claims 1 to 9, **characterised in that** the clamping element (36; 36.1 to 36.4) is integrally connected with the fastening profile (51; 51.1 to 51.6).

11. Belt band conveyor according to one of claims 1 to 10, **characterised in that** the clamping element (36; 36.1 to 36.4) is constructed as detent and/or snap element (63), at or in which the guide strip (50) is detented and/or snap-fitted.

12. Belt band conveyor according to one of claims 1 to 11, **characterised in that** the clamping element (36.2, 36.3, 36.4) has at its free end (64) an entry chamfer (70) facilitating introduction of the guide strip (50).

13. Belt band conveyor according to one of claims 1 to 12, **characterised in that** the clamping shoes (35.4, 35.5) have a T-shaped or double-T-shaped outer contour (85.1) in a projection plane parallel to the belt plane (26.1, 26.2).

14. Belt band conveyor according to one of claims 1 to 13, **characterised in that** the clamping shoes (35; 35.1 to 35.5) have in conveying direction (28) a mean width (94) which is smaller than the effective deflection diameter (95) of the deflecting roller (23).

15. Belt band conveyor according to claim 14, **characterised in that** the mean width (94) of the clamping shoes (35; 35.1 to 35.5) is the same size as or smaller than the effective deflection radius (96) of the deflecting roller (23).

16. Belt band conveyor according to one of claims 1 to 15, **characterised in that** at least one punctiform fastening location (56) is formed between the fastening profile (51; 51.1 to 51.6) and the conveyor belt (25).

17. Belt band conveyor according to one of claims 1 to 6, **characterised in that** a linear fastening location (57) extending transversely to the conveying direction (28) is formed between the fastening profile (51; 51.1 to 51.6) and the conveyor belt (25).

18. Belt band conveyor according to one of claims 1 to 17, **characterised in that** the fastening profile (51.3 to 51.6) is fixedly connected with a further clamping element (36.2, 36.4), by means of which a resilient-flexible sealing band (92) extending in conveying direction (28) preferably substantially without interruption over the entire length of the conveyor belt (25) is fixedly clamped relative to the fastening profile (51.3 to 51.6), which vertically overlaps a cover limb (98) arranged in stationary position and extending transversely to the belt plane (26.1) in direction towards the conveyor belt (25).

## Revendications

1. Convoyeur à courroie (27), en particulier convoyeur à courroie courbe (21), ayant une courroie de transport sans fin (25) entraînée au moyen de poulies de déviation (23), sur laquelle est fixé un élément de guidage (27) faisant saillie au-delà de son plan de courroie (26.1, 26.2), qui peut être manipulé séparément avant sa fixation sur la courroie de transport (25) et qui se déplace avec la courroie de transport (25) lors de la rotation de celle-ci et sur lequel des surfaces de guidage (29) s'étendant dans la direction de transport (28) de la courroie de transport (25) se déroulent lors de la rotation de la courroie de transport (25) sur des surfaces de roulement (31) inclinées dans le plan de la courroie (26.1, 26.2) de poulies de guidage rotatives (30.1, 30.2), de telle sorte que des forces transversales (34) apparaissant transversalement à la direction de transport (28) de la courroie de transport (25) sont compensables,
**caractérisé en ce qu'**une pluralité d'agrafes de serrage séparées (35, 35.1 à 35.5) sont fixées dans la direction de transport (28) le long de la courroie de transport (25), lesquelles présentent chacune un profilé de fixation (51, 51.1 à 51.6) fixé sur la courroie de transport (25) et un élément de serrage à déformation élastique (36, 36.1 à 36.4) relié à celui-ci, au moyen desquels une barre conductrice flexible élastique (50) s'étendant dans la direction de transport (28) sensiblement sans interruption sur la longueur complète de la courroie de transport (25) et formant l'élément de guidage (27) est fixée par rapport au profilé de fixation (51, 51.1 à 51.6).

2. Convoyeur à courroie selon la revendication 1,
**caractérisé en ce que** la barre conductrice (50) est fixée sous une déformation élastique de l'élément de serrage (36, 36.1 à 36.4) par la barre conductrice (50).

3. Convoyeur à courroie selon l'une quelconque des revendications 1 ou 2, **caractérisé en ce que** la barre conductrice (50) est fixée sur le profilé de fixation (51, 51.1 à 51.6) par engagement positif et/ou par force.

4. Convoyeur à courroie selon l'une quelconque des revendications 1 à 3, **caractérisé en ce que** la barre conductrice (50) est fixée de façon sûre au moyen de l'élément de serrage (36, 36.1 à 36.4) en empêchant et/ou en prévenant un glissement de la barre conductrice (50) dans la direction de transport (28) par rapport au profilé de fixation (51, 51.1 à 51.6), de telle sorte que la barre conductrice (50) fixée entre deux éléments de serrage adjacents (36, 36.1 à 36.4) est étendue élastiquement dans une zone entre les éléments de serrage adjacents (36, 36.1 à 36.4) lors de la rotation de la courroie de transport (25) autour des poulies de guidage (23).

5. Convoyeur à courroie selon l'une quelconque des revendications 1 à 4, **caractérisé en ce que** la barre conductrice (50) est traversée dans la position montée, au moins dans des zones de rencontre, au moins en partie par un élément d'ancrage (54) relié de façon fixe avec l'élément de serrage (36.2) et/ou avec le profilé de fixation (51.4), lequel assure une fixation par engagement positif de la barre conductrice (50) par rapport au profilé de fixation (51.4).

6. Convoyeur à courroie selon l'une quelconque des revendications 1 à 5, **caractérisé en ce que** l'élément de serrage (36, 36.1 à 36.4) et/ou le profilé de fixation (51, 51.1 à 51.6) sont constitués d'acier à ressorts.

7. Convoyeur à courroie selon l'une quelconque des revendications 1 à 6, **caractérisé en ce que** la barre conductrice (50) est fixée de façon à pouvoir être à nouveau détachée.

8. Convoyeur à courroie selon l'une quelconque des revendications 1 à 7, **caractérisé en ce que** la barre conductrice (50) est fixée de façon à pouvoir être à nouveau détachée sans destruction.

9. Convoyeur à courroie selon l'une quelconque des revendications 7 ou 8, **caractérisé en ce que** la barre conductrice (50) est fixée de façon à pouvoir être à nouveau détachée jusqu'à des zones de rencontre.

10. Convoyeur à courroie selon l'une quelconque des revendications 1 à 9, **caractérisé en ce que** l'élément de serrage (36, 36.1 à 36.4) est relié d'une seule pièce avec le profilé de fixation (51, 51.1 à 51.6).

11. Convoyeur à courroie selon l'une quelconque des revendications 1 à 10, **caractérisé en ce que** l'élément de serrage (36, 36.1 à 36.4) est réalisé en tant qu'élément à cran d'arrêt et/ou à déclic (63), sur ou dans lequel ou lesquels la barre conductrice (50) est encliquetée.

12. Convoyeur à courroie selon l'une quelconque des revendications 1 à 11, **caractérisé en ce que** l'élément de serrage (36.2, 36.3, 36.4) présente sur son extrémité libre (64) un biseau d'insertion (70) facilitant l'insertion de la barre conductrice (50).

13. Convoyeur à courroie selon l'une quelconque des revendications 1 à 12, **caractérisé en ce que** les agrafes de serrage (35.4, 35.5) présentent dans un plan de projection parallèle au plan de la courroie (26.1, 26.2) un contour extérieur en forme de T ou de double T (85.1).

14. Convoyeur à courroie selon l'une quelconque des revendications 1 à 13, **caractérisé en ce que** les agrafes de serrage (35, 35.1 à 35.5) présentent dans la direction de transport (28) une largeur centrale (94) qui est plus petite que le diamètre de déviation effectif (95) des poulies de déviation (23).

15. Convoyeur à courroie selon la revendication 14,
**caractérisé en ce que** la largeur centrale (94) des agrafes de serrage (35, 35.1 à 35.5) est de la même taille ou plus petite que le rayon de déviation effectif (96) des poulies de déviation (23).

16. Convoyeur à courroie selon l'une quelconque des revendications 1 à 15, **caractérisé en ce qu'**au moins une zone de fixation en forme de point (56) est réalisée entre le profilé de fixation (51, 51.1 à 51.6) et la courroie de transport (25).

17. Convoyeur à courroie selon l'une quelconque des revendications 1 à 16, **caractérisé en ce qu'**une zone de fixation en forme de ligne (57) s'étendant transversalement à la direction de transport (28) est réalisée entre le profilé de fixation (51, 51.1 à 51.6) et la courroie de transport (25).

18. Convoyeur à courroie selon l'une quelconque des revendications 1 à 17, **caractérisé en ce que** le profilé de fixation (51.3 à 51.6) est relié de façon fixe à un élément de serrage supplémentaire (36.2, 36.4) au moyen duquel une bande d'étanchéité élastique flexible (92), s'étendant dans la direction de transport (28) de préférence sensiblement sans interruption sur la longueur complète de la courroie de transport (25) est fixée par rapport au profilé de fixation (51.3 à 51.6), laquelle chevauche verticalement un montant de recouvrement (98) agencé en position fixe et s'étendant transversalement au plan de la courroie (26.1) dans la direction de la courroie de transport (25).
